# EUROPÄISCHE PATENTANMELDUNG

(11) **EP 4 050 247 A1**
(43) Veröffentlichungstag der Anmeldung: **31.08.2022**
(21) Anmeldenummer: 22157395.9
(22) Anmeldetag: 18.02.2022
(51) Int. Cl.: F16K 31/365, F16K 21/06, F16K 31/385

(54) **PILOTGESTEUERTES REGELVENTIL**

(30) Priorität: 26.02.2021 DE 102021104632
(71) Anmelder: VAG GmbH, 68305 Mannheim (DE)
(72) Erfinder: Erlenhofer, Bernd, 44265 Dortmund (DE)
(74) Vertreter: Charrier Rapp & Liebau

(57) **Zusammenfassung**

Pilotgesteuertes Regelventil mit einem Hauptventil (1) und einem über Steuerleitungen mit dem Hauptventil (1) verbundenen Pilotventil (2), wobei das Hauptventil (1) einen innerhalb eines Gehäuses (3) zwischen einem Zulauf (4) und einem Ablauf (5) angeordneten Ventilsitz (6) und einen mittels eines Stellelements (7) gegenüber dem Ventilsitz (6) beweglichen Ventilkörper (8) zum Schließen und Öffnen eines Durchgangs zwischen dem Zulauf (4) und dem Ablauf (5) enthält und wobei das Stellelement (7) innerhalb einer mit dem Gehäuse (3) verbundenen Haube (10) einen mit dem Zulauf (4) und dem Pilotventil (2) in Verbindung stehenden Druckraum (12) begrenzt, wobei an der Haube (10) ein erster Anschluss (14) für eine erste Steuerleitung (15) zur Verbindung des Druckraums (12) mit dem Zulauf (4) und ein zweiter Anschluss (16) für eine von dem Druckraum (12) zu einem Eingang (17) des Pilotventils (2) führende zweite Steuerleitung (18) vorgesehen sind.

## Beschreibung

Die Erfindung betrifft ein pilotgesteuertes Regelventil nach dem Oberbegriff des Anspruchs 1.

Ein derartiges pilotgesteuertes Regelventil ist bekannt und wird von der Anmelderin unter der Bezeichnung VAG PICO^{®} in verschiedenen Bauarten hergestellt. Es weist ein Hauptventil und ein über Steuerleitungen mit dem Hauptventil verbundenes Pilotventil auf. Das Hauptventil enthält einen innerhalb eines Gehäuses zwischen einem Zulauf und einem Ablauf angeordneten Ventilsitz und einen mittels eines Stellelements gegenüber dem Ventilsitz beweglichen Ventilkörper, durch den ein Durchgang zwischen dem Zulauf und dem Ablauf geschlossen oder geöffnet werden kann. Das Stellelement zur Betätigung des Ventilkörpers ist als Membran ausgebildet, die mit einer am Gehäuse angeordneten Haube eine mit dem Zulauf und dem Pilotventil verbundenen Druckraum zur Steuerung des Ventilkörpers begrenzt. An der Haube ist ein einzelner Anschluss für die Verbindung des Druckraums mit dem Zulauf und dem Pilotventil vorgesehen. Hierzu ist an den einzelnen Anschluss der Haube eine Leitung angeschlossen, die in eine zwischen dem Zulauf und dem Ablauf angeordnete Bypassleitung stromaufwärts des Pilotventils mündet. Wenn ein derartiges Ventil als Druckbegrenzungsventil in Wasserversorgungsnetzen eingesetzt wird, strömt das Wasser bei geöffnetem Pilotventil durch die Bypassleitung an der Zuleitung zum Druckraum vorbei. Hierbei kommt es zu einer Druckentlastung in dem durch die Membran abgetrennten Druckraum innerhalb der Haube, nicht aber zum kontinuierlichen Austausch des im Druckraum befindlichen Wassers. Durch das in Druckraum innerhalb der Haube stehende Wasser (Totwasser) kann es dort zur Entstehung von coliformen Keimen kommen. Dies stellt besonders bei der Trinkwasserversorgung ein ernsthaftes Problem dar. Durch derartige Keimherde in einzelnen Ventilen können gesamte Trinkwassernetze kontaminiert werden. Für die dann erforderliche Desinfektion des Trinkwassernetzes fallen erhebliche Kosten an.

Aufgabe der Erfindung ist es, ein pilotgesteuertes Regelventil der eingangs genannten Art zu schaffen, das auch einen hygienekonformen Einsatz in Trinkwassernetzen ermöglicht.

Diese Aufgabe wird durch pilotgesteuertes Regelventil mit den Merkmalen des Anspruchs 1 gelöst. Zweckmäßige Ausgestaltungen und vorteilhafte Weiterbildungen der Erfindung sind in den Unteransprüchen angegeben.

Bei dem erfindungsgemäßen pilotgesteuerten Regelventil weist das Hauptventil einen innerhalb eines Gehäuses zwischen einem Zulauf und einem Ablauf angeordneten Ventilsitz und einen mittels eines Stellelements gegenüber dem Ventilsitz beweglichen Ventilkörper zum Schließen und Öffnen eines Durchgangs zwischen dem Zulauf und dem Ablauf auf. Durch das Stellelement wird innerhalb einer mit dem Gehäuse verbundenen Haube eine mit dem Zulauf und dem Pilotventil in Verbindung stehenden Druckraum begrenzt. An der Haube sind ein erster Anschluss für eine erste Steuerleitung zur Verbindung des Druckraums mit dem Zulauf und ein zweiter Anschluss für eine von dem Druckraum zu einem Eingang des Pilotventils führende zweite Steuerleitung vorgesehen. Durch die voneinander getrennten Anschlüsse und die jeweiligen Steuerleitungen wird bei der Öffnung des Pilotventils eine kontinuierliche Zwangsdurchströmung des Druckraums am Hauptventil unter Beibehaltung der Regelcharakteristik erreicht. Das in dem Druckraum befindliche Wasser wird bei der Öffnung des Pilotventils vollständig ausgetauscht, so dass die Entstehung von coliformen Keimen vermieden werden kann. Dadurch kann einer Verkeimung des Druckraums und einer dadurch bedingten Verunreinigung des Wassernetzes entgegengewirkt werden.

In einer besonders zweckmäßigen Ausführung kann zwischen dem ersten Anschluss und der ersten Steuerleitung sowie zwischen dem zweiten Anschluss und der zweiten Steuerleitung jeweils ein Drosselventil angeordnet sein. Dadurch ist eine einfache Einstellung der Öffnungs- und Schließgeschwindigkeit erreichbar. Die Drosselventile können als Einfach-Drosseln ausgeführt sein.

Die erste Steuerleitung kann zweckmäßigerweise über eine Filtereinheit mit dem Zulauf verbunden sein. Der Ausgang des Pilotventils kann über eine weitere Steuerleitung mit dem Ablauf in Verbindung stehen. Das Stellelement kann vorzugsweise über eine Ventilführungsstange mit dem Ventilkörper verbunden sein.

In einer vorteilhaften Ausführung kann das Stellelement als eine zwischen einem Halteteil und der Haube eingespannte Membran ausgeführt sein. Zwischen dem als Membran ausgebildeten Stellelement und dem scheibenförmigen Halteteil kann ein Gegenruckraum vorgesehen sein. Der Gegendruckraum kann über Durchlässe in dem scheibenförmigen Halteteil mit dem Ablauf in Verbindung stehen. Das Stellelement kann aber auch ein Differentialkolben mit unterschiedlich großen Kolbenflächen sein.

Der Ventilkörper weist vorzugsweise ein scheibenförmiges Schließelement und einen mit Durchlässen versehenen Regelzylinder auf. Das scheibenförmige Schließelement des Ventilkörpers wird durch eine Druckfeder in Richtung des Ventilsitzes gedrückt.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein pilotgesteuertes Regelventil in einer Perspektivansicht und
- **Figur 2**: das in Figur 1 gezeigte Regelventil in einem Querschnitt.

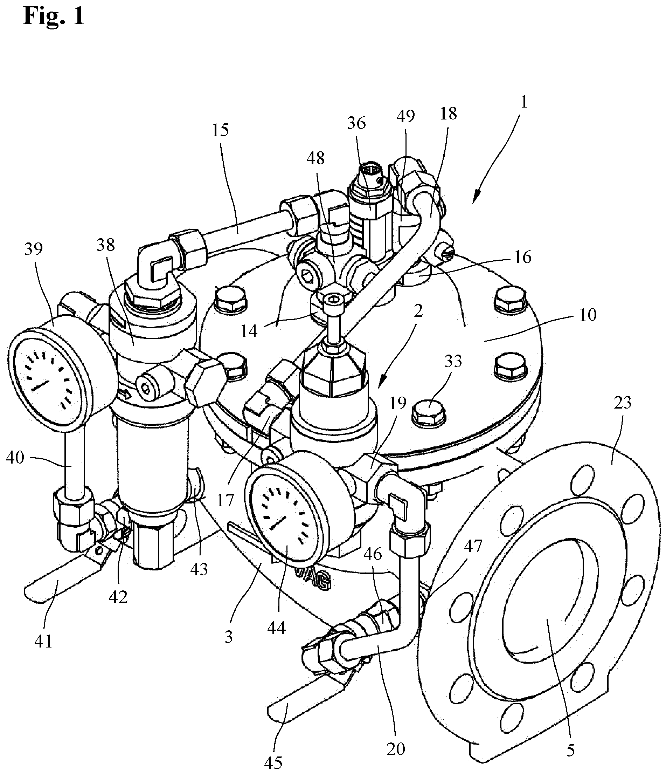

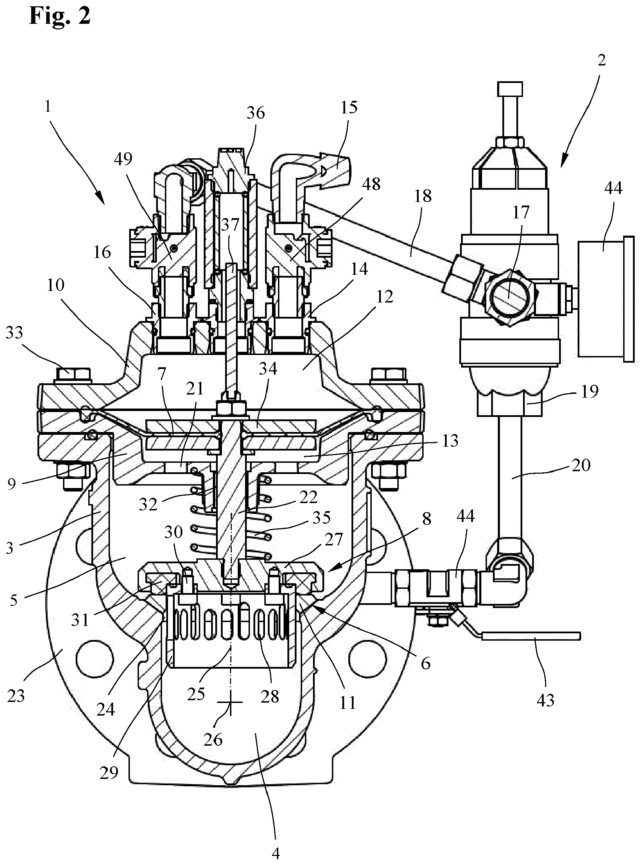

Das in Figur 1 in einer Perspektivansicht und in Figur 2 in einem Querschnitt dargestellte pilotgesteuerte Regelventil weist ein Hauptventil 1 und ein mit dem Hauptventil 1 über Steuerleitungen verbundenes Pilotventil 2 auf. In der gezeigten Ausführungsform ist das pilotgesteuerte Regelventil als eigenmedium-gesteuertes Druckreduzierventil ausgeführt und kann in einem Rohrleitungssystem für die Trinkwasserversorgung eingebaut sein.

Wie aus Figur 2 hervorgeht, enthält das Hauptventil 1 ein Gehäuse 3 mit einem zwischen einem Zulauf 4 und einem Ablauf 5 angeordneten Ventilsitz 6. Innerhalb des Gehäuses 3 ist ein mit dem Ventilsitz 6 zusammenwirkender und mittels eines Stellelements 7 bewegbarer Ventilkörper 8 angeordnet. In der gezeigten Ausführung ist das Stellelement 7 als elastische Membran ausgebildet, die zwischen einem scheibenförmigen Halteteil 9 und einer auf das Gehäuse 3 aufgesetzten Haube 10 eingespannt ist. Der Ventilsitz 6 ist beim gezeigten Ausführungsbeispiel in Form eines auf das Gehäuse 3 aufgeschweißten Ventilsitzringes 11 ausgeführt. Der Ventilsitz 6 kann auch als ein gesondertes und in das Gehäuse 3 eingesetztes, ringförmiges Bauteil ausgebildet sein.

Das als Membran ausgebildete Stellelement 7 begrenzt mit der auf das Gehäuse 3 aufgesetzten Haube 10 einen oberen Druckraum 12. Zwischen dem als Membran ausgebildeten Stellelement 7 und dem scheibenförmigen Halteteil 9 ist ein unterer Gegendruckraum 13 vorgesehen. Durch das als Membran ausgeführte Stellelement 7 wird der obere Druckraum 12 von dem unteren Gegendruckraum 13 abgetrennt. Der zwischen der Haube 10 und dem membranförmigen Stellelement 7 angeordnete Druckraum 12 ist über eine in die Haube 10 durch einen ersten Anschluss 14 einmündende erste Steuerleitung 15 mit dem Zulauf 4 verbunden. An der Haube 10 ist ferner ein zweiter Anschluss 16 für eine von dem Druckraum 12 zu einem Eingang 17 des Pilotventils 2 führende zweite Steuerleitung 18 vorgesehen. Der Ausgang 19 des Pilotventils 2 steht über eine weitere Steuerleitung 20 mit dem Ablauf 5 in Verbindung. Der zwischen dem membranförmigen Stellelement 7 und dem scheibenförmigen Halteteil 9 angeordnete Gegendruckraum 13 steht über Durchlässe 21 in dem Halteteil 9 mit dem Ablauf 5 in Verbindung. Das membranförmige Stellelement 7 ist über eine Ventilführungsstange 22 mit dem Ventilkörper 8 verbunden.

Das Gehäuse 3 ist zum Einbau in ein Rohrleitungssystem in an sich bekannter Weise mit Anschlussflanschen 23 versehen. Der Ventilsitz 6 enthält eine zylindrische Durchgangsöffnung 24. Bei dem gezeigten Ausführungsbeispiel ist der ringförmige Ventilsitz 6 innerhalb des Gehäuses 3 derart angeordnet, dass die Mittelachse 25 der Durchgangsöffnung 24 rechtwinklig zur Mittelachse 26 des Zulaufs 4 und entsprechend zur Mittelachse des Ablaufs 5 ist.

Der Ventilkörper 8 umfasst ein scheibenförmiges Schließelement 27 und einen mit Durchlässen 28 versehenen Regelzylinder 29, der innerhalb der Durchgangsöffnung 24 des Ventilsitzes 6 verschiebbar ist. Durch die Außenseite des Regelzylinders 29 und die Durchgangsöffnung 24 des Ventilsitzes 6 wird ein in Strömungsrichtung zwischen dem Zulauf 3 und dem Ablauf 4 liegender Ringspalt begrenzt. Bei dem gezeigten Regelzylinder 29 sind die Durchlässe 28 als Langlöcher mit unterschiedlichen Abmessungen ausgeführt. Die Durchlässe 28 können aber auch als Bohrungen oder dgl. ausgebildet sein.

In der gezeigten Ausführung ist der Regelzylinder 29 über Schrauben 30 lösbar an dem scheibenförmigen Schließelement 27 befestigt. Dadurch kann der Regelzylinder 29 bei Bedarf ausgetauscht oder durch einen Regelzylinder 29 mit anders gestalteten Durchlässen 28 ersetzt werden. An der Unterseite des scheibenförmigen Schließelements 27 ist ein Dichtelement 31 angeordnet, das in der in Figur 1 gezeigten Schließstellung des Ventilkörpers 8 zur abdichtenden Anlage auf einer oberen Stirnfläche der Ventilsitzrings 11 gelangt. Das in Form eines profilierten Dichtrings ausgebildete Dichtelement 31 ist in eine entsprechende Aufnahmenut an der Unterseite des scheibenförmigen Schließelements 27 eingesetzt und bei Bedarf ebenfalls auswechselbar.

Das scheibenförmige Schließelement 27 ist mit dem unteren Ende der Ventilführungsstange 22 verschraubt. Die Ventilführungsstange 22 ist in einer zentralen Führungsbohrung 32 des auf dem Gehäuse 3 befestigten scheibenförmigen Halteteils 9 axial verschiebbar geführt. Das scheibenförmige Halteteil 9 ist mit Hilfe von Schauben 33 über die Haube 10 am Gehäuse 3 befestigt. An dem gegenüber dem Halteteil 9 nach oben vorstehenden oberen Teil der Ventilführungsstange 22 ist das als Membran ausgebildete Stellelement 7 zwischen zwei Klemmscheiben 34 befestigt. An der Außenseite ist das membranförmige Stellelement 7 zwischen dem scheibenförmigen Halteteil 9 und der Haube 10 eingeklemmt. Zwischen der Unterseite des scheibenförmigen Halteteils 9 und dem scheibenförmigen Schließelement 27 des Ventilkörpers 8 ist eine Druckfeder 35 eingespannt. Durch die Druckfeder 35 wird das Schließelement 27 in Richtung des Ventilsitzes 6 gedrückt. Auf der Haube 10 ist eine Stellungsanzeige 36 angeordnet, die einen mit der Ventilführungsstange 22 verbundenen Anzeigestift 37 enthält.

Wie aus Figur 1 ersichtlich ist, steht die über den ersten Anschluss 14 in die Haube 10 einmündende erste Steuerleitung 15 über eine Filtereinheit 38, ein erstes Manometer 39, eine Leitung 40 und einem mittels eines ersten Handhebels 41 betätigbaren ersten Kugelhahn 42 mit einem mit dem Zulauf 4 innerhalb des Gehäuses 3 verbundenen zulaufseitigen Anschluss 43 in Verbindung. Die an den zweiten Anschluss 16 an der Haube 10 angeschlossene zweite Steuerleitung 18 steht über das Pilotventil 2, ein zweites Manometer 44, die weitere Steuerleitung 20 und einen mittels eines zweiten Handhebels 45 betätigbaren zweiten Kugelhahn 46 mit einem mit dem Ablauf 5 innerhalb des Gehäuses 3 verbundenen ablaufseitigen Anschluss 47 in Verbindung. Zwischen dem ersten Anschluss 14 und der ersten Steuerleitung 15 sowie zwischen dem zweiten Anschluss 16 und der zweiten Steuerleitung 18 sind ein erstes Drosselventil 48 und ein zweites Drosselventil 49 zur Einstellung der Öffnungs- und Schließgeschwindigkeit angeordnet.

Bei dem gezeigten Ausführungsbeispiel ist das Regelventil als eigenmedium-gesteuertes Membranventil ausgeführt. Die Steuerung des Hauptventils 1 erfolgt über das Pilotventil 2 unter Nutzung des vorliegenden Leitungsdrucks als Betriebsenergie. Das pilotgesteuerte Regelventil benötigt somit keine externe Energieversorgung. Durch die mit dem Zulauf 4 verbundene erste Steuerleitung 15 kann das Fluid von dem Zulauf 4 über den ersten Anschluss 14 in den oberhalb der Membran 11 angeordnete Druckraum 12 strömen. Die von dem Druckraum 12 abzweigende zweite Steuerleitung 18 ist mit dem Eingang 17 des Pilotventils 2 verbunden. Bei geöffnetem Pilotventil 2 kann das in dem Druckraum 12 befindliche Fluid über die weitere Steuerleitung 20 in den Ablauf 5 stromabwärts des durch den Ventilsitz 6 und den Ventilkörper 8 gebildeten Ventils strömen. Bei geschlossenem Pilotventil 2 wird aufgrund der größeren Wirkfläche in dem Druckraum 12 im Vergleich zum Ventilsitz 6, der Ventilkörper 8 bei gleichen Drücken in der Schließstellung gehalten. Bei geschlossenem Pilotventil 2 steigt der Druck in dem Druckraum 12 auf Vordruckniveau und das Hauptventil 1 schließt. Bei geöffnetem Pilotventil 2 und Durchfluss in der Steuerleitungen 15 und 18 sinkt der Druck in der Druckraum 12 und das Hauptventil 1 öffnet.

Durch die voneinander getrennten Anschlüsse 14 und 16 und die jeweiligen Steuerleitungen 15 bzw. 18 wird bei der Öffnung des Pilotventils 2 eine kontinuierliche Zwangsdurchströmung des Druckraums 12 am Hauptventil 1 unter Beibehaltung der Regelcharakteristik erreicht. Das in dem Druckraum 12 befindliche Wasser wird bei der Öffnung des Pilotventils 2 vollständig ausgetauscht, so dass die Entstehung von coliformen Keimen vermieden werden kann. Dadurch kann eine Verkeimung des Druckraums 12 und eine dadurch bedingte Verunreinigung des Wassernetzes vermieden werden.

### Bezugszeichenliste

- 1: Hauptventil
- 2: Pilotventil
- 3: Gehäuse
- 4: Zulauf
- 5: Ablauf
- 6: Ventilsitz
- 7: Stellelement
- 8: Ventilkörper
- 9: Halteteil
- 10: Haube
- 11: Ventilsitzring
- 12: Druckraum
- 13: Gegendruckraum
- 14: Erster Anschluss
- 15: Erste Steuerleitung
- 16: Zweiter Anschluss
- 17: Eingang des Pilotventils
- 18: Zweite Steuerleitung
- 19: Ausgang des Pilotventils
- 20: Weitere Steuerleitung
- 21: Durchlass
- 22: Ventilführungsstange
- 23: Anschlussflansch
- 24: Durchgangsöffnung
- 25: Mittelachse
- 26: Mittelachse
- 27: Schließelement
- 28: Durchlass
- 29: Regelzylinder
- 30: Schraube
- 31: Dichtelement
- 32: Führungsbohrung
- 33: Schraube
- 34: Klemmscheibe
- 35: Druckfeder
- 36: Stellungsanzeige
- 37: Anzeigestift
- 38: Filtereinheit
- 39: Erstes Manometer
- 40: Leitung
- 41: Erster Handhebel
- 42: Erster Kugelhahn
- 43: Zulaufseitiger Anschluss
- 44: Zweites Manometer
- 45: Zweiter Handhebel
- 46: Zweiter Kugelhahn
- 47: Ablaufseitiger Anschluss
- 48: Erstes Drosselventil
- 49: Zweites Drosselventil

## Patentansprüche

1. Pilotgesteuertes Regelventil mit einem Hauptventil (1) und einem über Steuerleitungen mit dem Hauptventil (1) verbundenen Pilotventil (2), wobei das Hauptventil (1) einen innerhalb eines Gehäuses (3) zwischen einem Zulauf (4) und einem Ablauf (5) angeordneten Ventilsitz (6) und einen mittels eines Stellelements (7) gegenüber dem Ventilsitz (6) beweglichen Ventilkörper (8) zum Schließen und Öffnen eines Durchgangs zwischen dem Zulauf (4) und dem Ablauf (5) enthält und wobei das Stellelement (7) innerhalb einer mit dem Gehäuse (3) verbundenen Haube (10) einen mit dem Zulauf (4) und dem Pilotventil (2) in Verbindung stehenden Druckraum (12) begrenzt, **dadurch gekennzeichnet, dass** an der Haube (10) ein erster Anschluss (14) für eine erste Steuerleitung (15) zur Verbindung des Druckraums (12) mit dem Zulauf (4) und ein zweiter Anschluss (16) für eine von dem Druckraum (12) zu einem Eingang (17) des Pilotventils (2) führende zweite Steuerleitung (18) vorgesehen sind.

2. Pilotgesteuertes Regelventil nach Anspruch 1, **dadurch gekennzeichnet, dass** zwischen dem ersten Anschluss (14) und der ersten Steuerleitung (15) sowie zwischen dem zweiten Anschluss (16) und der zweiten Steuerleitung (18) jeweils ein Drosselventil (48, 49) angeordnet ist.

3. Pilotgesteuertes Regelventil nach Anspruch 1 oder 2, **dadurch gekennzeichnet, dass** die erste Steuerleitung (15) über eine Filtereinheit (38) mit dem Zulauf (4) verbunden ist.

4. Pilotgesteuertes Regelventil nach einem der Ansprüche 1 bis 3, **dadurch gekennzeichnet, dass** ein Ausgang (19) des Pilotventils (2) über eine weitere Steuerleitung (20) mit dem Ablauf (5) verbunden ist.

5. Pilotgesteuertes Regelventil nach einem der Ansprüche 1 bis 4, **dadurch gekennzeichnet, dass** das Stellelement (7) über eine Ventilführungsstange (22) mit dem Ventilkörper (8) verbunden ist.

6. Pilotgesteuertes Regelventil nach einem der Ansprüche 1 bis 5, **dadurch gekennzeichnet, dass** das Stellelement (7) als Membran ausgeführt ist, die zwischen einem scheibenförmigen Halteteil (9) und der Haube (10) eingespannt ist.

7. Pilotgesteuertes Regelventil nach Anspruch 6, **dadurch gekennzeichnet, dass** zwischen dem als Membran ausgebildeten Stellelement (7) und dem scheibenförmigen Halteteil (9) ein Gegendruckraum (13) angeordnet ist.

8. Pilotgesteuertes Regelventil nach Anspruch 7, **dadurch gekennzeichnet, dass** der Gegendruckraum (13) über Durchlässe (21) in dem scheibenförmigen Halteteil (9) mit dem Ablauf (5) in Verbindung steht.

9. Pilotgesteuertes Regelventil nach einem der Ansprüche 1 bis 8, **dadurch gekennzeichnet, dass** der Ventilkörper (8) ein scheibenförmiges Schließelement (27) und einen mit Durchlässen (28) versehenen Regelzylinder (29) umfasst.

10. Pilotgesteuertes Regelventil nach Anspruch 9, **dadurch gekennzeichnet, dass** das scheibenförmige Schließelement (27) des Ventilkörpers (8) durch eine Druckfeder (35) in Richtung des Ventilsitzes (6) gedrückt wird.
